# EUROPEAN PATENT APPLICATION

(11) **EP 2 645 246 A1**
(43) Date of publication of application: **02.10.2013**
(21) Application number: 12193312.1
(22) Date of filing: 20.11.2012
(51) Int. Cl.: G06F 9/50

(54) **Method and apparatus of memory management by storage system**

(30) Priority: 27.03.2012 US 201213430861
(71) Applicant: Hitachi Ltd., Tokyo 100-8280 (JP)
(72) Inventor: Taguchi, Yuichi, Tokyo, 100-8220 (JP)
(74) Representative: MERH-IP Matias Erny Reichl Hoffmann

(57) **Abstract**

Exemplary embodiments provide high-speed memory devices such as high-speed DRAM resources in a storage system for external computers. In accordance with an aspect of the invention, a computer system comprises: a computer which includes an internal memory (340) and an external memory, the external memory being provided by a storage system (100) coupled to the computer; and a controller (350) operable to manage a virtual memory space provided by the internal memory (340) and the external memory. The controller is operable to add a logical unit (520) provided by the storage system (100), to the external memory included in the virtual memory space, based on a usage level of the virtual memory space. The controller (350) is operable to release a logical unit (520) provided by the storage system (100), from the external memory included in the virtual memory space, based on the usage level of the virtual memory space.

## Description

### BACKGROUND OF THE INVENTION

The present invention relates generally to storage systems and, more particularly, to memory management by storage system.

An enterprise IT platform includes server computers and storage systems. A server computer runs business applications that generate large amounts of data. A Storage Area Network (SAN) is a network to interconnect server computers and storage systems so that data generated by servers can be stored on external storage systems. An operating system running on the server computer loads data on its memory space in order to run calculation processes. The memory space generally consists of memory devices installed on server computer. The memory device (e.g., DRAM) is generally limited to a small size, so that it must be consumed carefully and efficiently. However, there are situations where the memory device is insufficient against the size of data being loaded. To address the issue, the operating system has a virtual memory space management capability which creates memory space by combination of the memory device and other storage devices such as hard disk drive (HDD). The HDD capacity is used only when the DRAM memory is insufficient. The virtual memory space works as if it were a single memory device so that application programs do not have to take care of its consumption and behavior.

Today, not only a single application program but a lot of applications are able to run on a single server computer. One example is the virtual machine platform. Recent hypervisor technology allows multiple virtual machines to be deployed on a single server. Each virtual machine has its own virtual memory space. Usually a total virtual memory size can be set larger than its physical memory size. This configuration is the so-called "over provisioning" or "over subscription." While the usage of memory is low, problems do not occur; however, the performance of the virtual machines becomes extremely poor when the memory usage increases to a level where there is a shortage of memory because it consumes physical HDD located on the virtual memory space.

A traditional storage system serves SSD or HDD devices as storage resources. The storage system could not help to solve memory shortage problem happening on server computers.

### BRIEF SUMMARY OF THE INVENTION

Exemplary embodiments of the invention provide high-speed memory devices such as high-speed DRAM resources in a storage system for external computers. A server computer can append memory served by the storage system onto its virtual memory space so that the server computer is able to extend its memory size. In order to keep high memory usage efficiency, the storage system applies thin provisioning functionality for the memory device so that physical memory resource is consumed only when actual data is generated. On the other hand, DRAM resources installed on the storage system must be used efficiently because they may not be the primary purpose of memory use. The purpose of DRAM equipped on storage is originally a cache memory to accelerate I/O (input/output) performance. This means that the use of storage memory must be restricted to the situation where server memory usage is too high. This invention also discloses a method to release storage memory from server use after the memory usage becomes sufficiently low.

In accordance with an aspect of the present invention, a computer system comprises: a computer which includes an internal memory and an external memory, the external memory being provided by a storage system coupled to the computer; and a controller operable to manage a virtual memory space provided by the internal memory and the external memory. The controller is operable to add a logical unit provided by the storage system, to the external memory included in the virtual memory space, based on a usage level of the virtual memory space. The controller is operable to release a logical unit provided by the storage system, from the external memory included in the virtual memory space, based on the usage level of the virtual memory space.

In some embodiments, the logical unit has thin provisioning configuration applied by the storage system. The computer is a server computer which includes the controller operable to add/release the logical unit provided by the storage system based on the usage level of the virtual memory space. The computer further comprises a server computer coupled to the storage system; and a management computer coupled to the server computer and the storage system. The management computer includes the controller operable to add/release the logical unit provided by the storage system based on the usage level of the virtual memory space.

In specific embodiments, the controller is operable to add a logical unit provided by the storage system to the virtual memory space when the usage level of the virtual memory space is higher than a first preset threshold. The controller is operable to release a logical unit provided by the storage system from the virtual memory space when the usage level of the virtual memory space is lower than a second preset threshold which is lower than the first threshold. The controller is operable to shrink the external memory provided by the storage system from the virtual memory space by removing one or more storage devices from the external memory, when the usage level of the virtual memory space is lower than a third preset threshold which is lower than the first threshold for a preset period of time. The controller is operable to monitor the usage level of the virtual memory space and compare the monitored usage level with one or more preset thresholds to determine whether to add/release the logical unit provided by the storage system. The controller is operable to request the storage system to load a logical unit onto a cache memory to provide the logical unit to the external memory included in the virtual memory space, based on the usage level of the virtual memory space.

Another aspect of the invention is directed to a method of managing a virtual memory space provided by an internal memory and an external memory in a computer, the external memory being provided by a storage system coupled to the computer. The method comprises: adding a logical unit provided by the storage system, to the external memory included in the virtual memory space, by a controller based on a usage level of the virtual memory space; and releasing a logical unit provided by the storage system, from the external memory included in the virtual memory space, by the controller based on the usage level of the virtual memory space.

In some embodiments, the adding comprises adding a logical unit provided by the storage system to the virtual memory space when the usage level of the virtual memory space is higher than a first preset threshold. The releasing comprises releasing a logical unit provided by the storage system from the virtual memory space when the usage level of the virtual memory space is lower than a second preset threshold which is lower than the first threshold.

Another aspect of this invention is directed to a computer-readable storage medium storing a plurality of instructions for controlling a data processor to manage a virtual memory space provided by an internal memory and an external memory in a computer, the external memory being provided by a storage system coupled to the computer. The plurality of instructions comprise: instructions that cause the data processor to add a logical unit provided by the storage system, to the external memory included in the virtual memory space, based on a usage level of the virtual memory space; and instructions that cause the data processor to release a logical unit provided by the storage system, from the external memory included in the virtual memory space, based on the usage level of the virtual memory space.

These and other features and advantages of the present invention will become apparent to those of ordinary skill in the art in view of the following detailed description of the specific embodiments.

### BRIEF DESCRIPTION OF THE DRAWINGS

FIG. 1 illustrates an example of a hardware configuration of a storage system in which the method and apparatus of the invention may be applied.

FIG. 2 is an abstraction of storage resources assigned to the server computer.

FIG. 3 illustrates a conventional hardware configuration of the server computer.

FIG. 4 illustrates a conventional hardware configuration of the network switch.

FIG. 5 illustrates a conventional hardware configuration of the data storage.

FIG. 6 illustrates a conventional hardware configuration of the management computer.

FIG. 7 illustrates a software architecture stored on the memory of the server computer.

FIG. 8 illustrates a software architecture stored on the memory of the data storage.

FIG. 9 illustrates a software architecture stored on the memory of the management computer.

FIG. 10 illustrates a set of software components of the server computer management apparatus.

FIG. 11 illustrates a set of software components of the storage management apparatus.

FIG. 12 is a conventional example of the device management information stored on the server computer.

FIG. 13 is a conventional example of the memory usage information stored on the server computer.

FIG. 14 is a conventional example of the volume configuration information on the server computer.

FIG. 15 is a conventional example of the virtual machine configuration information of the server computer.

FIG. 16 is a conventional data structure of the LU configuration information on the data storage.

FIG. 17 is a conventional data structure of the thin provisioning status information on the data storage.

FIG. 18 is a local structure of the virtual memory device that is created on the server computer according to one embodiment.

FIG. 19 is an example of memory consumption behavior by the server computer.

FIG. 20 is a flowchart of the thin provisioning storage utilization process.

FIGS. 21, 22, and 23 show a flowchart of a process to attach and detach memory resources equipped on the data storage onto the virtual memory of the server computer.

FIGS. 24, 25, and 26 show a flowchart of a process to attach and detach memory resources equipped on the data storage onto the virtual memory of the server computer, according to another implementation in which the virtual memory management can be controlled by management computer.

FIGS. 27, 28, and 29 show a flowchart of a process to attach and detach memory resources equipped on the data storage onto the virtual memory of the server computer, according to another implementation in which the virtual memory management can be controlled by management computer and the data storage does not have to be equipped with thin provisioning functionality.

FIG. 30 is a local structure of the virtual memory device that is created on the server computer according to another embodiment.

### DETAILED DESCRIPTION OF THE INVENTION

In the following detailed description of the invention, reference is made to the accompanying drawings which form a part of the disclosure, and in which are shown by way of illustration, and not of limitation, exemplary embodiments by which the invention may be practiced. In the drawings, like numerals describe substantially similar components throughout the several views. Further, it should be noted that while the detailed description provides various exemplary embodiments, as described below and as illustrated in the drawings, the present invention is not limited to the embodiments described and illustrated herein, but can extend to other embodiments, as would be known or as would become known to those skilled in the art. Reference in the specification to "one embodiment," "this embodiment," or "these embodiments" means that a particular feature, structure, or characteristic described in connection with the embodiment is included in at least one embodiment of the invention, and the appearances of these phrases in various places in the specification are not necessarily all referring to the same embodiment. Additionally, in the following detailed description, numerous specific details are set forth in order to provide a thorough understanding of the present invention. However, it will be apparent to one of ordinary skill in the art that these specific details may not all be needed to practice the present invention. In other circumstances, well-known structures, materials, circuits, processes and interfaces have not been described in detail, and/or may be illustrated in block diagram form, so as to not unnecessarily obscure the present invention.

Furthermore, some portions of the detailed description that follow are presented in terms of algorithms and symbolic representations of operations within a computer. These algorithmic descriptions and symbolic representations are the means used by those skilled in the data processing arts to most effectively convey the essence of their innovations to others skilled in the art. An algorithm is a series of defined steps leading to a desired end state or result. In the present invention, the steps carried out require physical manipulations of tangible quantities for achieving a tangible result. Usually, though not necessarily, these quantities take the form of electrical or magnetic signals or instructions capable of being stored, transferred, combined, compared, and otherwise manipulated. It has proven convenient at times, principally for reasons of common usage, to refer to these signals as bits, values, elements, symbols, characters, terms, numbers, instructions, or the like. It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

The present invention also relates to an apparatus for performing the operations herein. This apparatus may be specially constructed for the required purposes, or it may include one or more general-purpose computers selectively activated or reconfigured by one or more computer programs. Such computer programs may be stored in a computer-readable storage medium, such as, but not limited to optical disks, magnetic disks, read-only memories, random access memories, solid state devices and drives, or any other types of media suitable for storing electronic information. The algorithms and displays presented herein are not inherently related to any particular computer or other apparatus. Various general-purpose systems may be used with programs and modules in accordance with the teachings herein, or it may prove convenient to construct a more specialized apparatus to perform desired method steps. In addition, the present invention is not described with reference to any particular programming language. It will be appreciated that a variety of programming languages may be used to implement the teachings of the invention as described herein. The instructions of the programming language(s) may be executed by one or more processing devices, e.g., central processing units (CPUs), processors, or controllers.

Exemplary embodiments of the invention, as will be described in greater detail below, provide apparatuses, methods and computer programs for memory management by storage system.

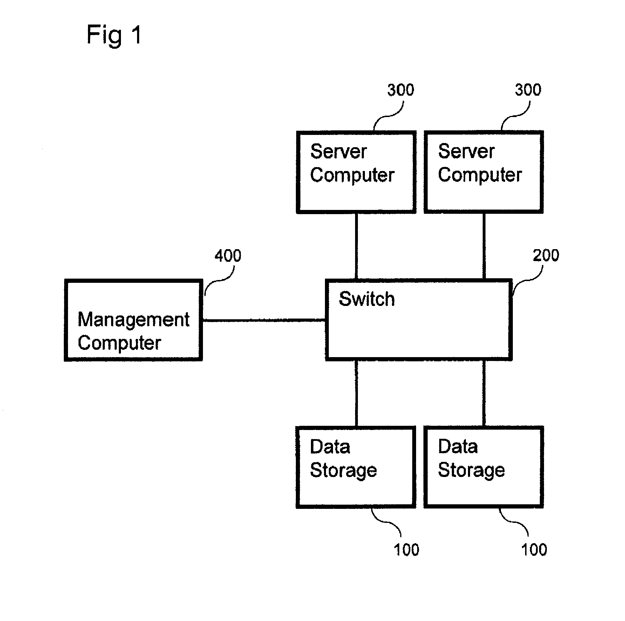

FIG. 1 illustrates an example of a hardware configuration of a storage system in which the method and apparatus of the invention may be applied. Server computers 300, data storage or storage subsystems 100, and a management computer 400 are connected by a switch 200. Generally, Ethernet, Fibre Channel, or Infiniband and some other type of switch are used for SAN (Storage Area Network). The management Computer 400 serves to manage the entire storage system.

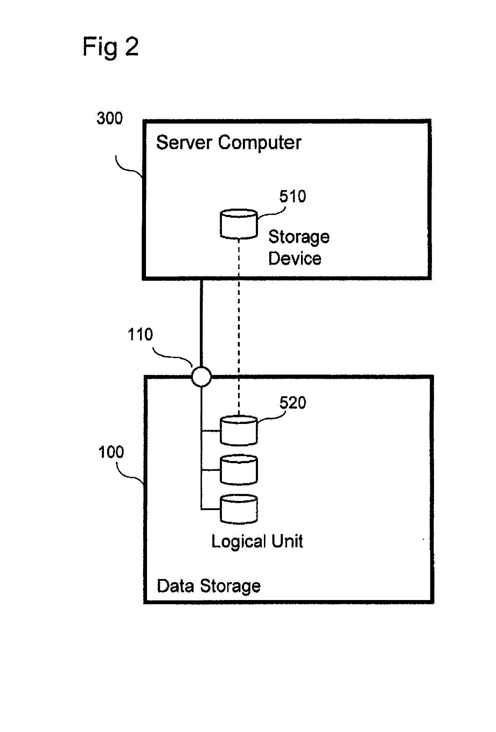

FIG. 2 is an abstraction of storage resources assigned to the server computer 300. Storage devices equipped on the data storage 100 generate logical units (LUs) 520. A logical unit is a part or a combination of physical storage devices such as SSD and HDD. A LU is allocated one or more network interfaces 110 so they can be referred to by external computers. The server computer 300 can bind a LU 520 as a local storage device 510.

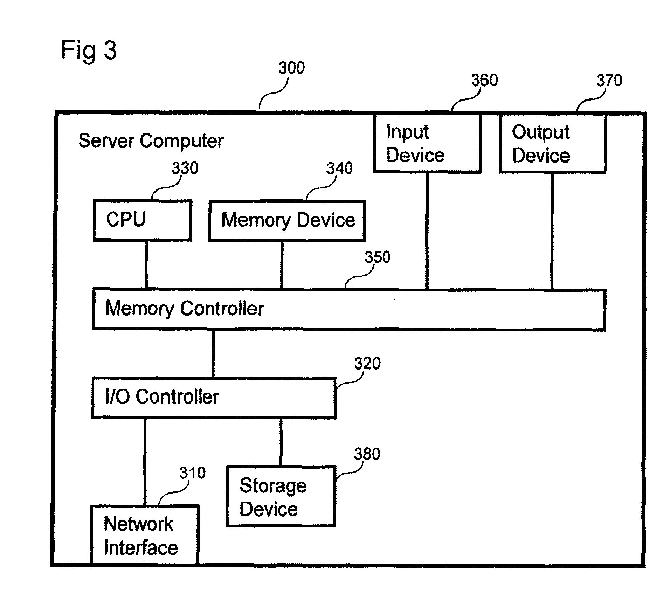

FIG. 3 illustrates a conventional hardware configuration of the server computer 300. A CPU 330, a memory device 340, an input device 360 (e.g., keyboard and mouse), and an output device 370 (e.g., a video graphics card connected to an external display monitor) are interconnected through a memory controller 350. All I/Os processed by an I/O controller 320 are transferred to an internal storage device 380, an external storage device through a network interface 310, or the memory controller 350. This configuration can be implemented by an ordinary, popular, multi-purpose PC (personal computer).

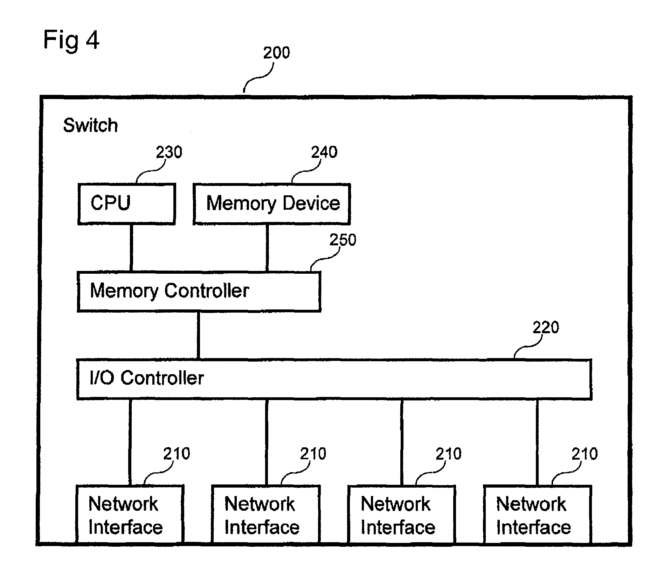

FIG. 4 illustrates a conventional hardware configuration of the network switch 200. A CPU 230 and a memory device 240 are connected to a memory controller 250, which is connected to an I/O controller 220 that is connected to a plurality of network interfaces 210.

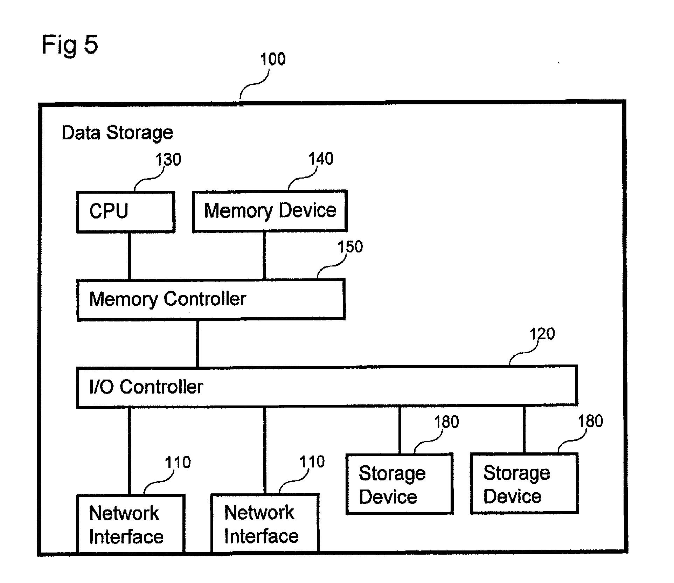

FIG. 5 illustrates a conventional hardware configuration of the data storage 100. A CPU 130 and a memory device 140 are connected to a memory controller 150, which is connected to an I/O controller 120 that is connected to a plurality of network interfaces 110 and storage devices 180.

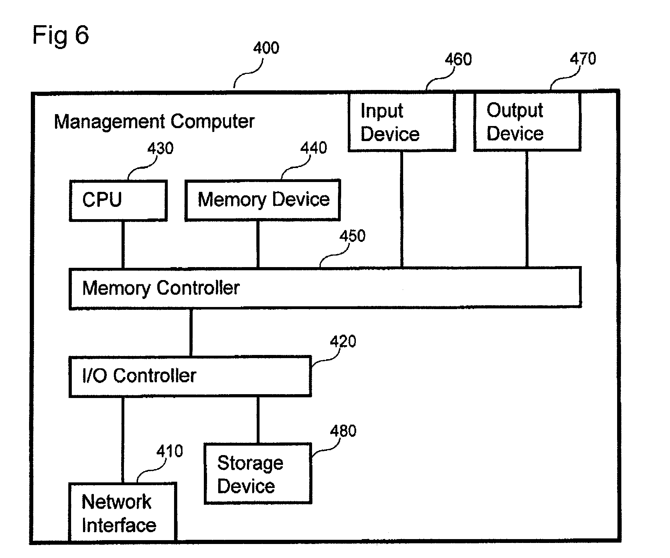

FIG. 6 illustrates a conventional hardware configuration of the management computer 400. A CPU 430, a memory device 440, an input device 460, and an output device 470 are connected to a memory controller 450, which is connected to an I/O controller 420 that is connected to a network interface 410 and a storage device 480.

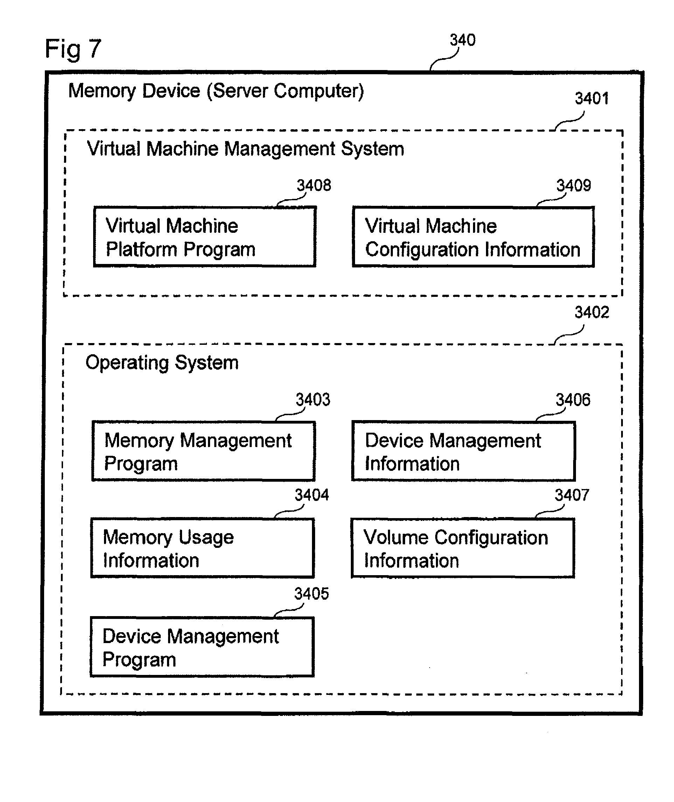

FIG. 7 illustrates a software architecture stored on the memory 340 of the server computer 300. The memory 340 includes a virtual machine management system 3401 and an operating system 3402. The virtual machine management system 3401 has a set of software to run virtual machines. It includes a virtual machine platform program 3408 and virtual machine configuration information 3409. Conventional examples of a virtual machine platform are VMware, Microsoft Hyper-V, KVM, and the like. The operating system 3402 runs an operating system such as Linux, Windows, HP-UX, or the like. It includes a memory management program 3403, memory usage information 3404, a device management program 3405, device management information 3406, and volume configuration information 3407. The memory management program 3403 controls utilization of memory and it also controls usage of virtual memory space. The memory usage information 3404 is a record of memory consumption status. The device management program 3405 manages detection, attachment, and detachment of devices such as external memory and storage. The device management information 3406 is a configuration definition of devices. The volume configuration information 3407 is a definition of storage volume configuration.

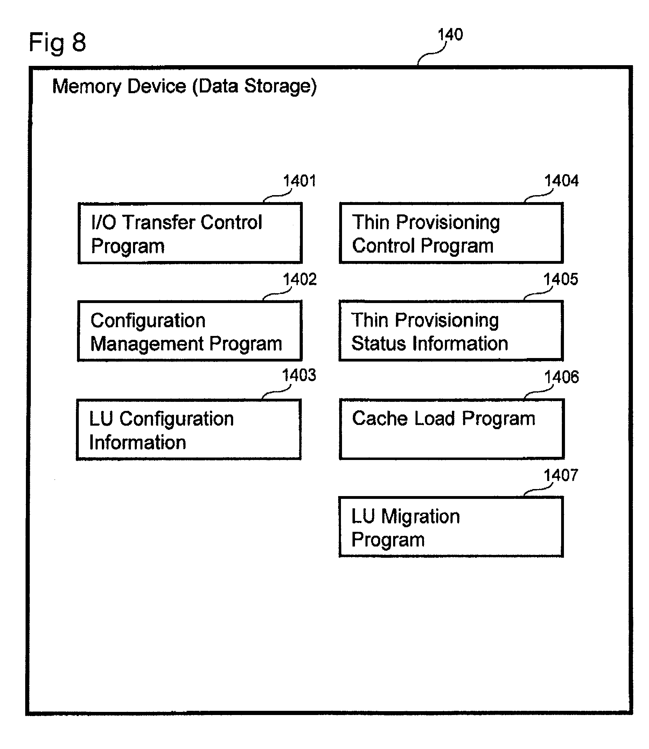

FIG. 8 illustrates a software architecture stored on the memory 140 of the data storage 100. An I/O transfer control program 1401 organizes every I/O request received from the server computer 100. Configuration management program 1402 manages configuration change. LU configuration information 1403 is a definition of storage LU configuration. A thin provisioning control program 1404 runs dynamic resource mapping/unmapping on storage service. Thin provisioning status information 1405 is a record of resource mapping status. A cache load program 1406 is a program to keep data stored on particular volumes on cache memory. A LU migration program 1407 offers a capability to move LU from original physical space to destination devices.

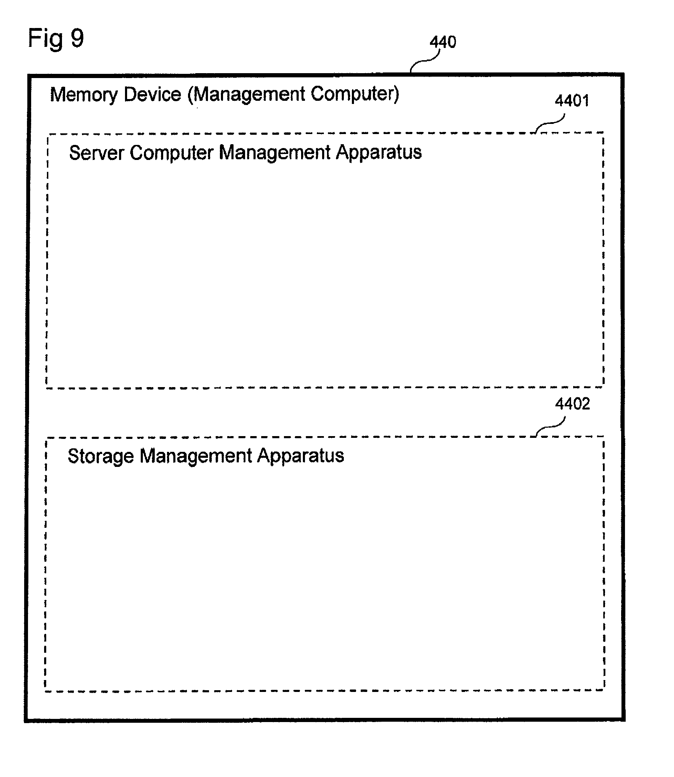

FIG. 9 illustrates a software architecture stored on the memory 440 of the management computer 400. The management computer 400 has two major functionalities provided by a server computer management apparatus 4401 and a storage management apparatus 4402.

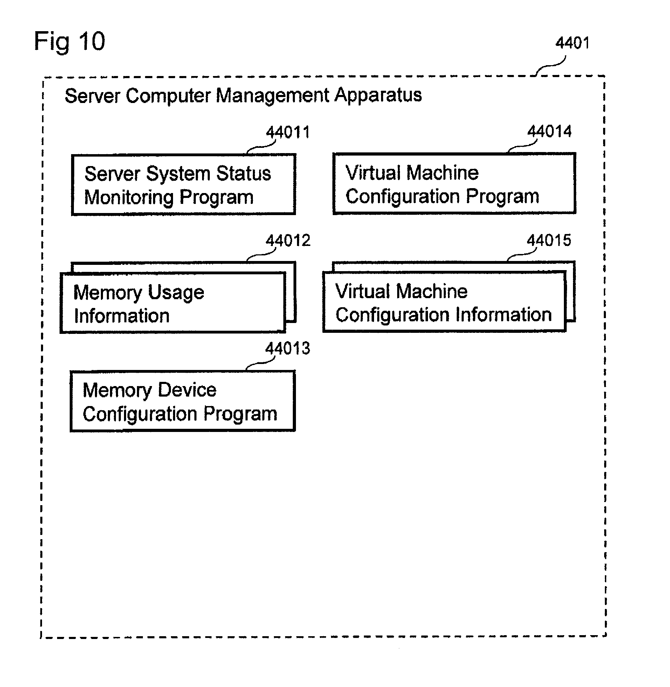

FIG. 10 illustrates a set of software components of the server computer management apparatus 4401. A server system status monitoring program 44011 receives and keeps server status information such as memory usage information 44012 updated. Memory usage information 44012 is a copy of the memory usage information 3404 received from the server computer 300. Memory device configuration information 44013 is a configuration of memory devices available at the server computer 300. A virtual machine configuration program 44014 issues configuration change request messages to control the virtual machine configuration. Virtual machine configuration information 44012 is a copy of the virtual machine configuration information 3409.

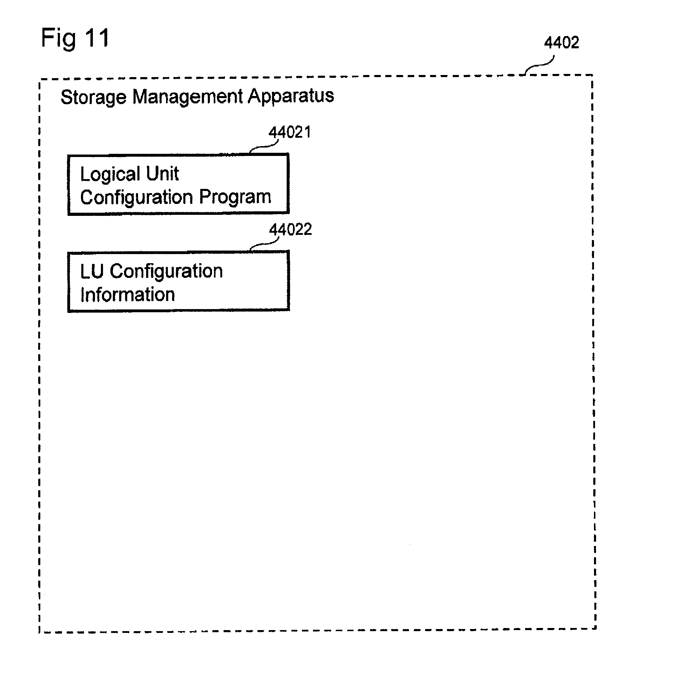

FIG. 11 illustrates a set of software components of the storage management apparatus 4402. A logical unit configuration program 44021 issues configuration change request messages to create and delete logical units on the data storage 100. LU configuration information 44022 is a copy of the LU configuration information 1403. The logical unit configuration program 44021 keeps the LU configuration information 1403 updated.

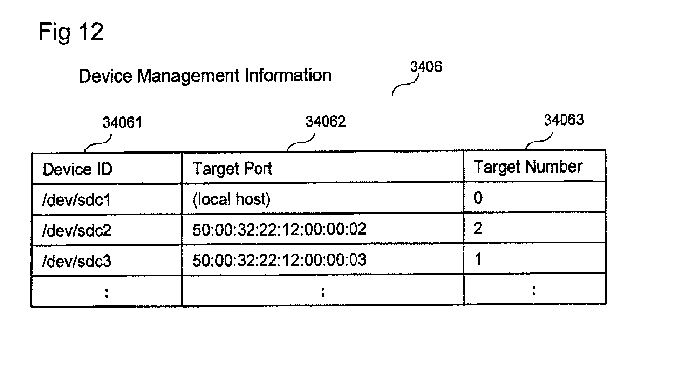

FIG. 12 is a conventional example of the device management information 3406 stored on the server computer 300. It includes columns of device ID 34061, target port 34062, and target number 34063. The device ID 34061 is an identifier of devices such as the storage device 510. In one conventional manner, the device ID 34061 can represent a "mount point" of a file system running on the server computer 300. For example, devices can be handled as "/dev/sdc1 ", "/dev/sdc2" on its file system. The target port 34062 is a port to identify interface of devices. The target number 34063 is a number to identify a device configured on the target port 34062. This configuration makes it possible to represent both an internal device and an external device as a combination of the target port 34062 and target number 34063. For example, a logical unit "2" defined on port "50:00:32:22:12:00:00:02" of the data storage 100 can be recognized and mounted as "/dev/sdc1" on the server computer 300. A port "50:00:32:22:12:00:00:02" corresponds to the network interface 110 of the data storage 100 and it can be represented as World Wide Name of Fibre Channel, IP address, MAC address of Ethernet, and so on.

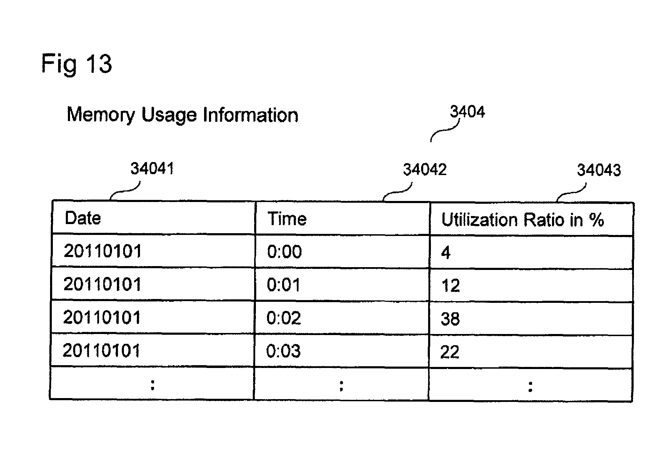

FIG. 13 is a conventional example of the memory usage information 3404 stored on the server computer 300. It has columns of date 34041, time 34042, and utilization ratio in % 34043. The server computer 300 records memory consumption ratio on the memory usage information 3404.

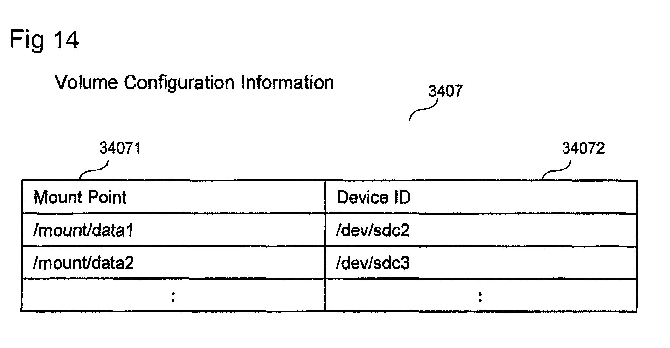

FIG. 14 is a conventional example of the volume configuration information 3407 on the server computer 300. It has columns of mount point 34071 and device ID 34072. The storage device 510 represented by the device ID 34072 is mounted to a location defined on the mount point 34071. Software running on the server computer 300 is able to read from and write to an external storage device by access to the locally mounted storage device 510. This data structure is the same as /etc/fstab file of the traditional UNIX operating system.

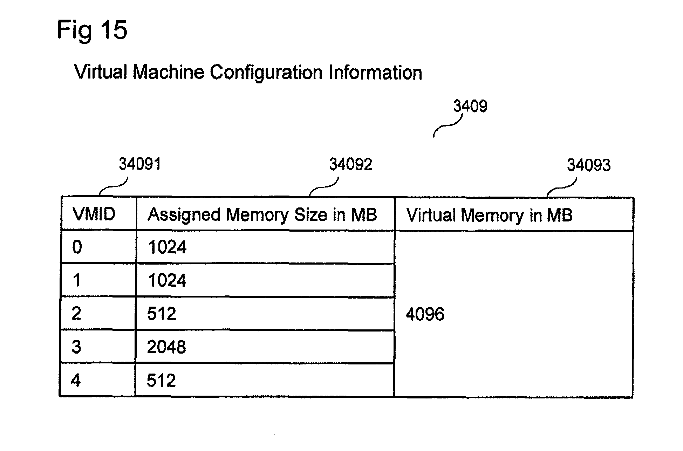

FIG. 15 is a conventional example of the virtual machine configuration information 3409 of the server computer 300. It has columns of VMID (virtual machine ID) 34091, assigned memory size in MB 34092, and virtual memory in MB (megabyte) 34093. A typical hypervisor program of a virtual machine server offers "over provisioning" of memory resource for virtual machines. In other word, a single physical memory 340 can be shared by multiple virtual machines running on the server computer 300. For example, virtual machine defined by VMID "0" is allocated "1024MB" memory. By over-provisioning capability, the sum of the assigned memory 34092 can exceed the virtual memory 34093. This causes serious performance degradation when total memory consumption comes up to physical memory size because the server computer starts to use HDD resources by supplement of memory shortage.

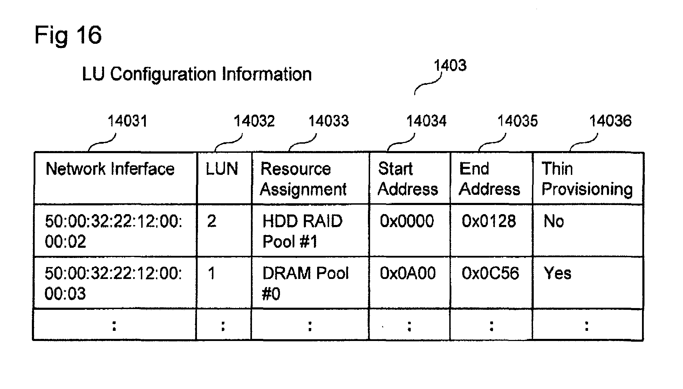

FIG. 16 is a conventional data structure of the LU configuration information 1403 on the data storage 100. It has columns of network interface 14031, LUN 14032, resource assignment 14033, start address 14034, end address 14035, and thin provisioning 14036. A logical unit can be identified as a combination of network interface 14031 and logical unit number (LUN) 14032. The logical unit number 14032 is an identifier of the logical unit configured on the network interface 110 represented by the network interface 14031. Physical storage resources of the logical unit is defined as a combination of the resource assignment 14033, start address 14034, and end address 14035. The resource assignment 14033 is a physical resource of storage. For instance, a set of HDDs and a set of DRAM devices can be assigned to logical units. A part of these resources that are specified as the start address 14034 and end address 14035 are allocated to the logical unit. Also, this logical unit is configured to thin provisioning volume if the thin provisioning status information 14036 is set to "Yes" or "On."

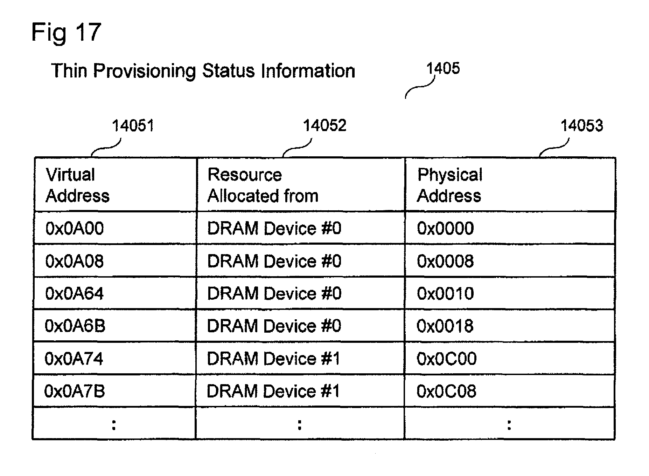

FIG. 17 is a conventional data structure of the thin provisioning status information 1405 on the data storage 100. It has columns of virtual address 14051, resource allocated from 14052, and physical address 14053. In cases where the logical unit is defined as thin provisioning configuration, the physical storage resource is not consumed at the initial phase. The physical storage resources are allocated dynamically when data write is requested. For example, a storage block represented by the virtual address 14051 is allocated from the physical resource represented by a combination of the "resource allocated from" 14052 and physical address 14053.

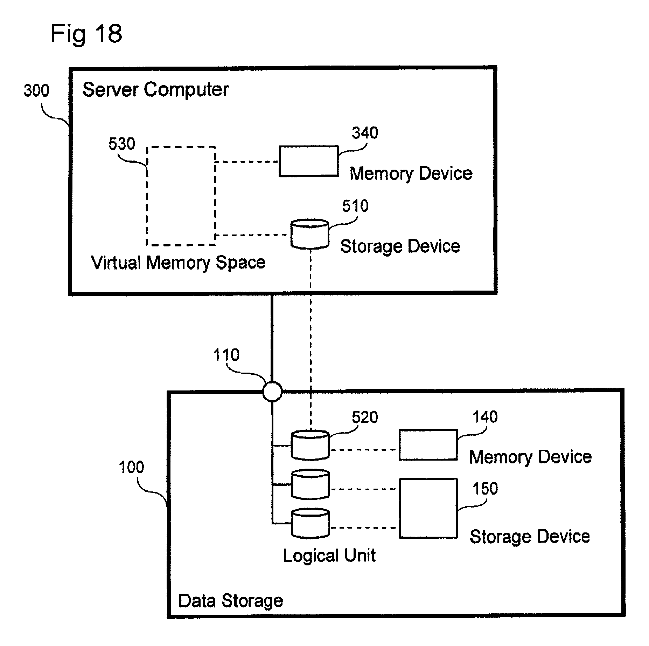

FIG. 18 is a local structure of the virtual memory device that is created on the server computer 300 according to one embodiment. The virtual memory 530 can be created by a combination of the memory device 340 and the external storage device 510. This external storage device 510 corresponds to the logical unit 520 of the data storage 100. This logical unit 520 corresponds to either the memory device 140 or the storage device 150. As such, the virtual memory can be configured by the local memory device 340 and the external memory device 140 that is provided by the data storage 100.

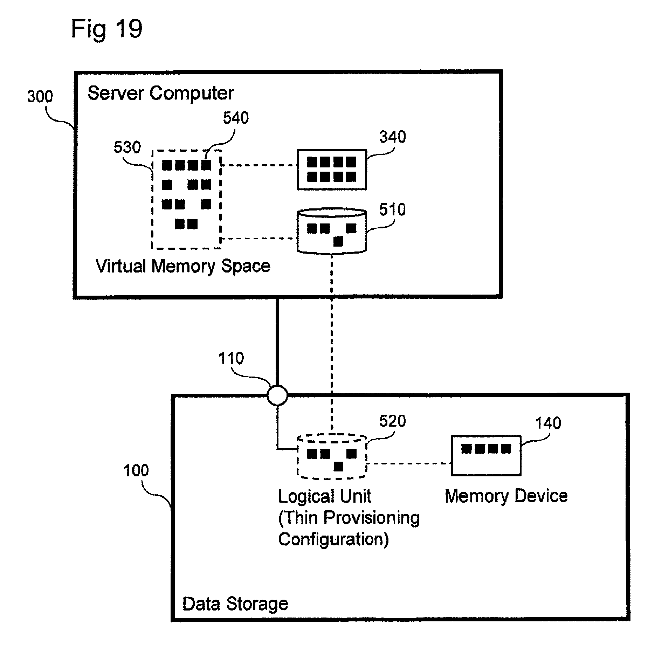

FIG. 19 is an example of memory consumption behavior by the server computer 300. The server computer 300 starts to consume the local memory 340 and, if this resource runs out, it starts to consume the external memory resource 510.

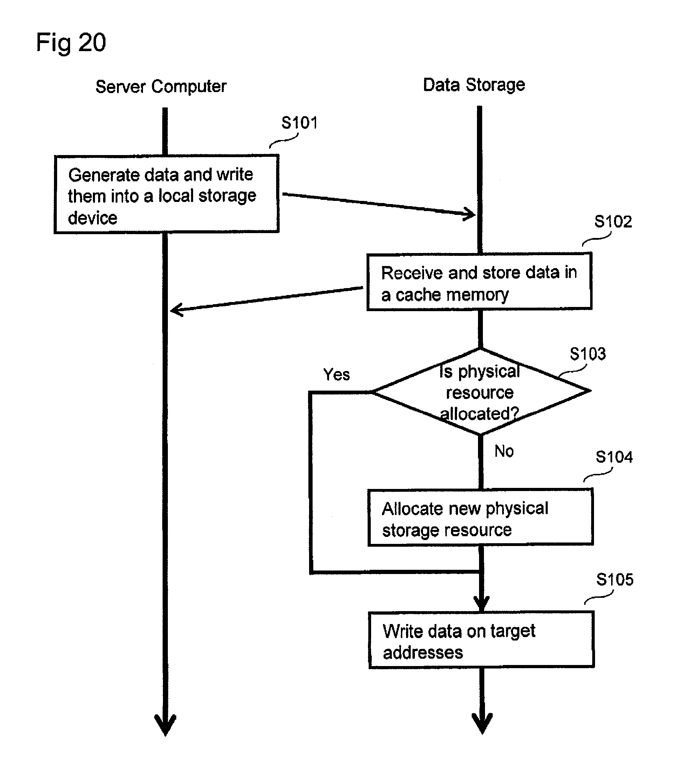

FIG. 20 is a flowchart of the thin provisioning storage utilization process. Software running on the server computer 300 generates data and start to write process into a local storage device 510 (S101). As described in connection with FIG. 2, data is sent to the data storage 100. The data storage 100 receives and stores the data in a cache memory (S102). After write caching, the data storage 100 is able to return an acknowledgement message to the server computer 300 in order to report a status that data writing is accepted so that the server computer 300 does not have to wait any longer. Then the data storage 100 writes cached data into the physical storage devices 180. If the physical storage resources that correspond to the target address of write data have been allocated, the data storage 100 simply writes the data into the physical storage target (S105). Otherwise, the data storage 100 has to allocate physical storage block in advance to actual data write process (S104).

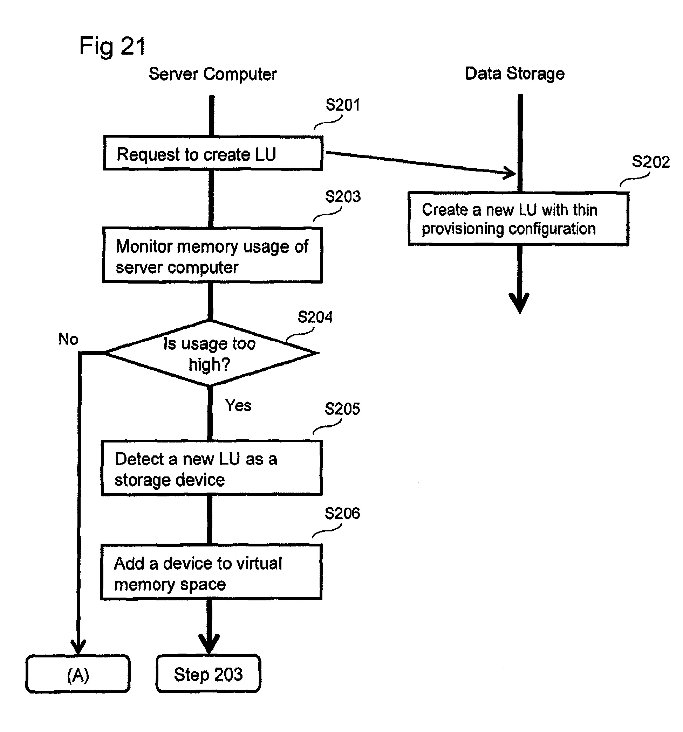

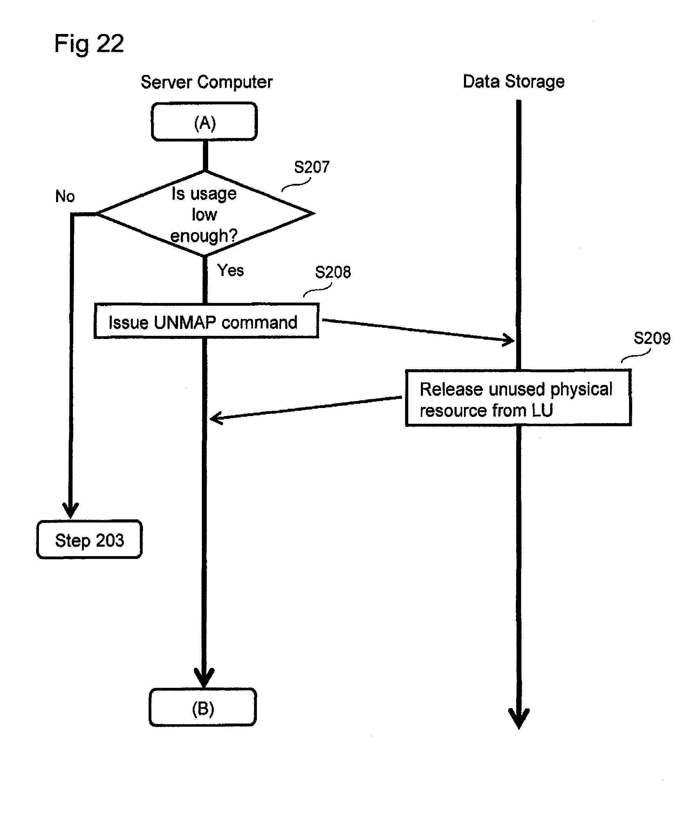

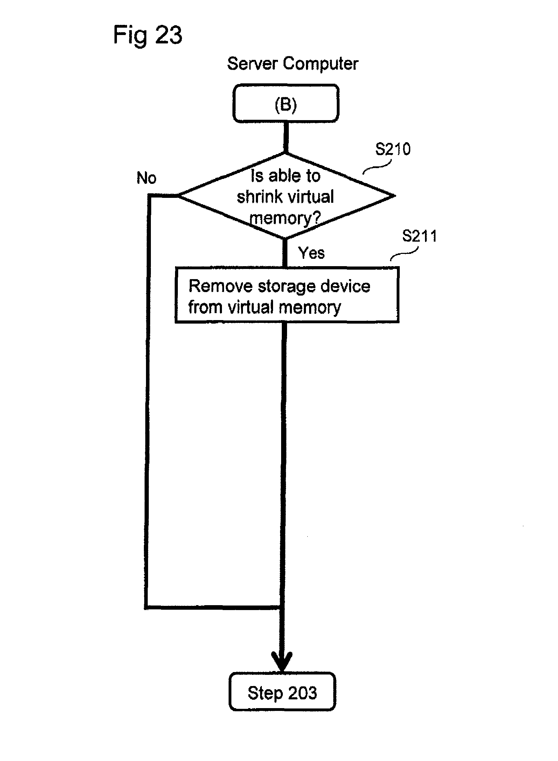

FIGS. 21, 22, and 23 show a flowchart of a process to attach and detach memory resources equipped on the data storage 100 onto the virtual memory of the server computer 300. First, the server computer 300 issues a request message to create a LU (S201). The data storage 100 creates a new logical unit (S202). This LU is created on the memory device 140 with thin provisioning configuration, so that physical memory resources are not consumed at this phase or stage of the process.

The memory management program 3403 monitors memory usage and records it on the memory usage information 3404 (S203). If the memory management program 3403 judges that memory consumption is too high (S204), it starts to add external memory resources to the virtual memory space 530. The device management program 3405 detects a new LU that was created at S202 and updates the device management information 3406 and volume configuration information 3407 (S205). The memory management program 3403 adds a LU to the virtual memory space 530 (S206). The process returns to S203 after S206. If the memory consumption is not too high (S204), the process continues to S207.

The memory resource equipped on the data storage 100 should be consumed effectively because its primary usage is a cache memory. Therefore, the memory management program 3403 tries to release allocated storage block when it is appropriate to do so. The memory management program 3403 judges the memory consumption ratio to determine whether the memory usage is sufficiently low (S207). If the memory usage is low enough, it issues an UNMAP command to the data storage 100 (S208). The data storage 100 releases unused storage block from the LU (S209). The process continues to S21 0 after S209. If the memory usage is not low enough, the process returns to S203.

The memory management program 3403 is able to unmount the LU that is not consumed. The memory management program 3403 refers to the memory usage information 3404 and judges if the size of the virtual memory space is too big to consume (S21 0). For example, it can judge based on whether the virtual memory consumption is kept low continuously for more than one day, one week, or one month. If it is determined that the virtual memory can be shrunk in S21 0, the device management program 3405 removes the storage device 510 from the virtual memory space 540 (S211). The process returns to S203 after S211 or if it is determined that the virtual memory cannot be shrunk.

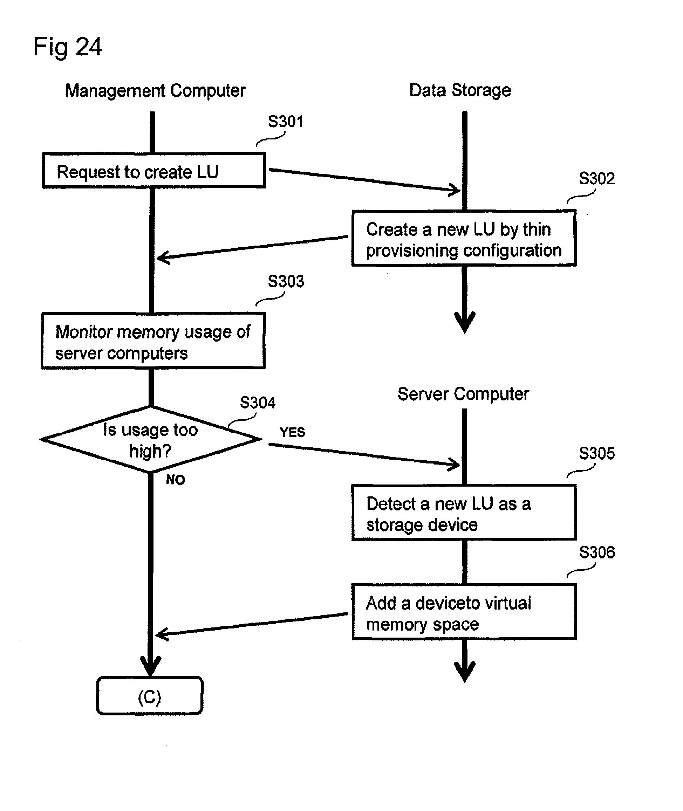

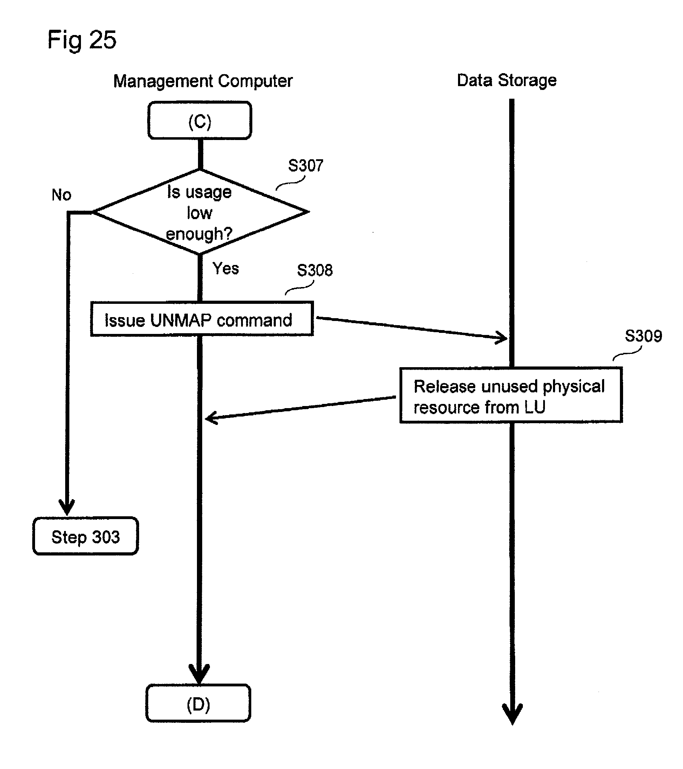

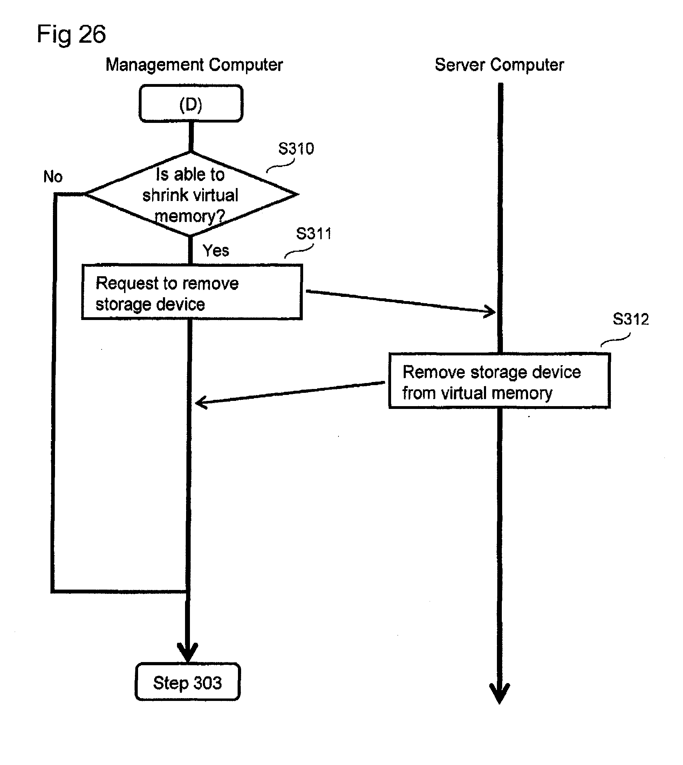

FIGS. 24, 25, and 26 show a flowchart of a process to attach and detach memory resources equipped on the data storage 100 onto the virtual memory of the server computer 300, according to another implementation in which the virtual memory management can be controlled by management computer 400. First, the management computer 400 issues a request message to create a LU (S301). The data storage 100 creates a new logical unit (S302). This LU is created on the memory device 140 with thin provisioning configuration, so that physical memory resources are not consumed at this phase or stage of the process.

The memory management program 3403 obtains from the server computer the result of monitoring memory usage and records it on the memory usage information 3404 (S303). If the memory management program 3403 judges that memory consumption is too high (S304), the server computer 300 starts to add external memory resources to the virtual memory space 530. The device management program 3405 detects a new LU that was created at S302 and updates the device management information 3406 and volume configuration information 3407 (S305). The memory management program 3403 adds a LU to the virtual memory space 530 (S306). The process continues to S307.

The memory resource equipped on the data storage 100 should be consumed effectively because its primary usage is a cache memory. Therefore, the memory management program 3403 tries to release allocated storage block when it is appropriate to do so. The memory management program 3403 obtains from the server computer the result of judging the memory consumption ratio to determine whether the memory usage is sufficiently low (S307). If the memory usage is low enough, it issues an UNMAP command to the data storage 100 (S308). The data storage 100 releases unused storage block from the LU (S309). The process continues to S310 after S309. If the memory usage is not low enough, the process returns to S303.

The memory management program 3403 is able to unmount the LU that is not consumed. The memory management program 3403 refers to the memory usage information 3404 and judges if the size of the virtual memory space is too big to consume (S31 0). For example, it can judge based on whether the virtual memory consumption is kept low continuously for more than one day, one week, or one month. If it is determined that the virtual memory can be shrunk in S310, the management computer 400 sends a request to the server computer 300 to remove the storage device 510 (S311) and the device management program 3405 in the server computer 300 removes the storage device 510 from the virtual memory space 540 (S312). The process returns to S303 after S312 or if it is determined that the virtual memory cannot be shrunk.

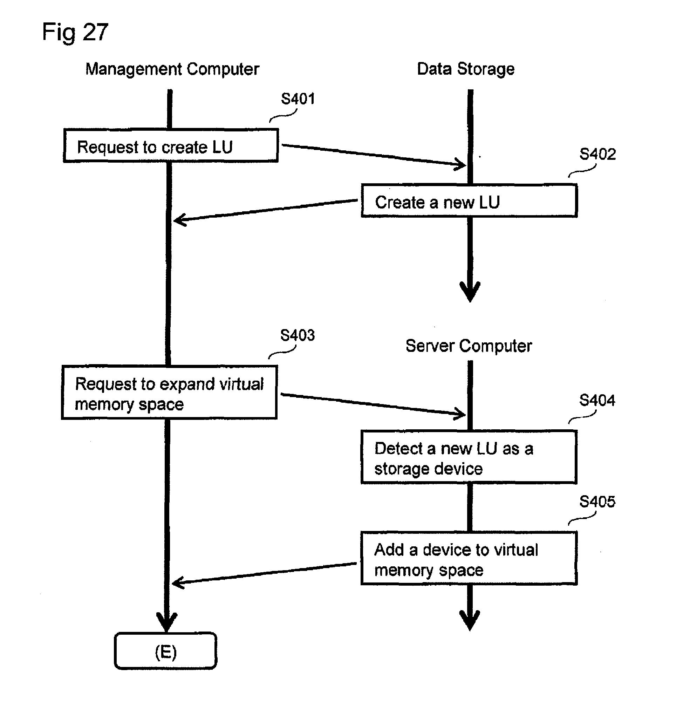

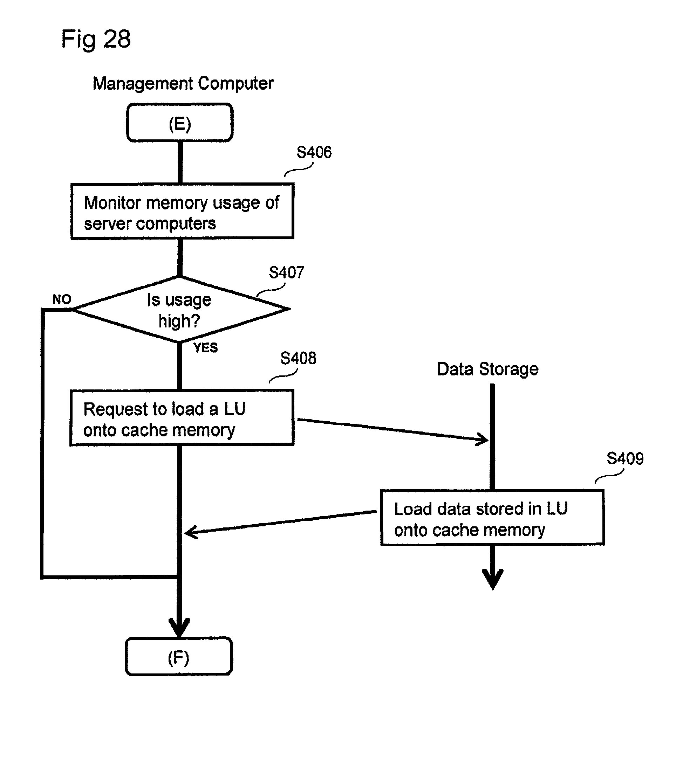

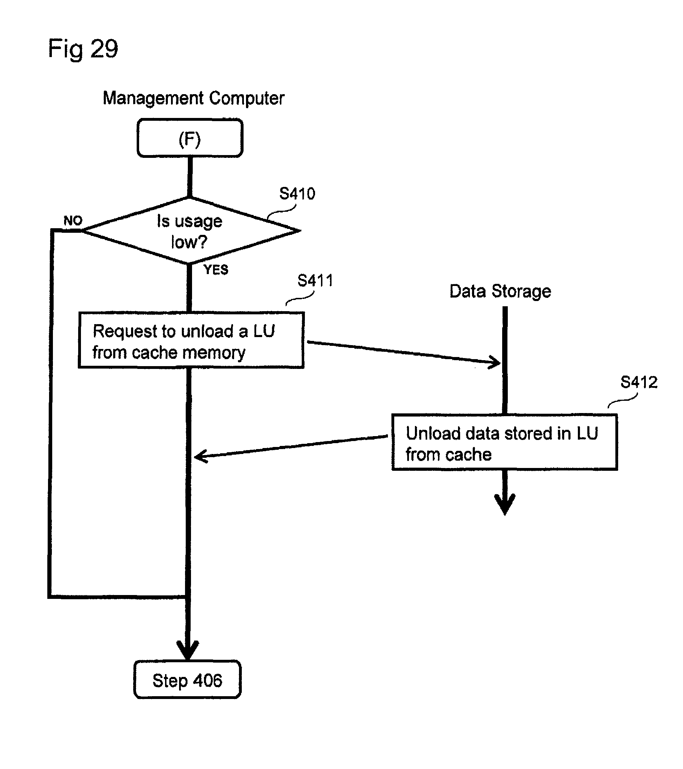

FIGS. 27, 28, and 29 show a flowchart of a process to attach and detach memory resources equipped on the data storage 100 onto the virtual memory of the server computer 300, according to another implementation in which the virtual memory management can be controlled by management computer 400 and the data storage 100 does not have to be equipped with thin provisioning functionality.

S401 is the same as S301. In S402, the data storage 100 creates a new LU, but not by thin provisioning configuration. In S403, the management computer 400 requests the server computer 300 to expand the virtual memory space. S404 and S405 are the same as S305 and S306, but in this case, the data storage 100 offers a new LU by HDD resources at initial phase (S404). In S406, the management computer 400 monitors memory usage of the server computers 300. If the virtual memory usage is high, the management computer 400 requests to load a LU onto cache memory (S408). The cache load program 1406 in the data storage 100 loads a LU that includes a part of virtual memory onto the cache memory. All I/O access on virtual memory is processed on local and external memory device so that it solves the problem of performance degradation. One example of implementing this is US2010/0100680, which is incorporated herein by reference in its entirety. If the virtual memory usage is not high (S407), the management computer determines whether the usage is low (S41 0). If yes, the management computer requests to unload a LU from the cache memory (S411). The cache load program 1406 in the data storage 100 unloads the data stored in LU from cache (S412). The process returns to S406.

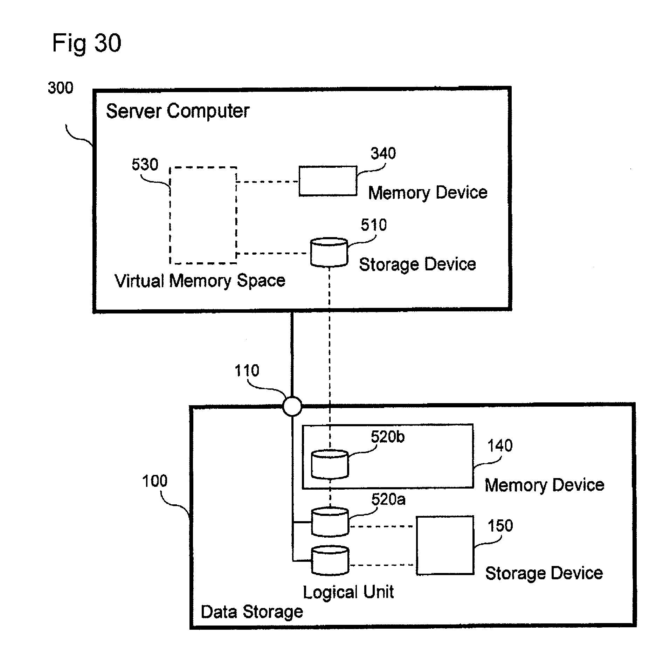

In another implementation, the cache loading of FIGS. 27-29 can be replaced by volume migration between HDD and memory devices. One example for this implementation is U.S. Patent No. 5,956,750, which is incorporated herein by reference in its entirety. FIG. 30 is a local structure of the virtual memory device that is created on the server computer 300 according to another embodiment. As compared to FIG. 18, the external storage device 510 corresponds to either logical units 520a that correspond to the storage device 150 or logical units 520b that are part of the memory device 140 (representing migration between HDD and memory devices).

In another implementation, memory usage judgment can be replaced by over-provisioning status of FIG. 15. For example, if the sum of virtual memory size (assigned memory size in MB 34092 in FIG. 15) exceeds the size of the physical memory size (virtual memory in MB 34093 in FIG. 15), the memory management program 3403 expands the virtual memory space 540 to keep the provisioned memory size lower than the physical memory size 34093.

In order to improve storage efficiency, it is beneficial to utilize multiple types of media such as SSD, SAS and SATA. However, a data file that contains multiple sub-files in it must be stored into a storage volume, such that it is impossible to utilize multiple storage tiers. Embodiments of this invention decompose a data file into multiple sub-files and store them in the best type of storage.

Of course, the system configuration illustrated in FIG. 1 is purely exemplary of information systems in which the present invention may be implemented, and the invention is not limited to a particular hardware configuration. The computers and storage systems implementing the invention can also have known I/O devices (e.g., CD and DVD drives, floppy disk drives, hard drives, etc.) which can store and read the modules, programs and data structures used to implement the above-described invention. These modules, programs and data structures can be encoded on such computer-readable media. For example, the data structures of the invention can be stored on computer-readable media independently of one or more computer-readable media on which reside the programs used in the invention. The components of the system can be interconnected by any form or medium of digital data communication, e.g., a communication network. Examples of communication networks include local area networks, wide area networks, e.g., the Internet, wireless networks, storage area networks, and the like.

In the description, numerous details are set forth for purposes of explanation in order to provide a thorough understanding of the present invention. However, it will be apparent to one skilled in the art that not all of these specific details are required in order to practice the present invention. It is also noted that the invention may be described as a process, which is usually depicted as a flowchart, a flow diagram, a structure diagram, or a block diagram. Although a flowchart may describe the operations as a sequential process, many of the operations can be performed in parallel or concurrently. In addition, the order of the operations may be re-arranged.

As is known in the art, the operations described above can be performed by hardware, software, or some combination of software and hardware. Various aspects of embodiments of the invention may be implemented using circuits and logic devices (hardware), while other aspects may be implemented using instructions stored on a machine-readable medium (software), which if executed by a processor, would cause the processor to perform a method to carry out embodiments of the invention. Furthermore, some embodiments of the invention may be performed solely in hardware, whereas other embodiments may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

From the foregoing, it will be apparent that the invention provides methods, apparatuses and programs stored on computer readable media for memory management by storage system. Additionally, while specific embodiments have been illustrated and described in this specification, those of ordinary skill in the art appreciate that any arrangement that is calculated to achieve the same purpose may be substituted for the specific embodiments disclosed. This disclosure is intended to cover any and all adaptations or variations of the present invention, and it is to be understood that the terms used in the following claims should not be construed to limit the invention to the specific embodiments disclosed in the specification. Rather, the scope of the invention is to be determined entirely by the following claims, which are to be construed in accordance with the established doctrines of claim interpretation, along with the full range of equivalents to which such claims are entitled.

## Claims

1. A computer system comprising:
a computer which includes an internal memory (340) and an external memory, the external memory being provided by a storage system (100) coupled to the computer (300); and
a controller (350) operable to manage a virtual memory space provided by the internal memory (340) and the external memory;
wherein the controller (350) is operable to add a logical unit provided by the storage system (100), to the external memory included in the virtual memory space, based on a usage level of the virtual memory space; and
wherein the controller (350) is operable to release a logical unit (520) provided by the storage system (100), from the external memory included in the virtual memory space, based on the usage level of the virtual memory space.

2. The computer system according to claim 1,
wherein the logical unit (520) has thin provisioning configuration applied by the storage system (100).

3. The computer system according to claim 1 or 2,
wherein the computer is a server computer (300) which includes the controller (350) operable to add/release the logical unit (520) provided by the storage system (100) based on the usage level of the virtual memory space.

4. The computer system according to claim 1 or 2, further comprising:
a server computer (300) coupled to the storage system (100); and
a management computer (400) coupled to the server computer (300) and the storage system (100);
wherein the management computer (400) includes the controller (350) operable to add/release the logical unit (520) provided by the storage system (100) based on the usage level of the virtual memory space.

5. The computer system according to at least one of claims 1 to 4,
wherein the controller (350) is operable to add a logical unit (520) provided by the storage system (100) to the virtual memory space when the usage level of the virtual memory space is higher than a first preset threshold.

6. The computer system according to claim 5,
wherein the controller (350) is operable to release a logical unit (520) provided by the storage system (100) from the virtual memory space when the usage level of the virtual memory space is lower than a second preset threshold which is lower than the first threshold.

7. The computer system according to claim 5,
wherein the controller (350) is operable to shrink the external memory provided by the storage system (100) from the virtual memory space by removing one or more storage devices (180) from the external memory, when the usage level of the virtual memory space is lower than a third preset threshold which is lower than the first threshold for a preset period of time.

8. The computer system according to claim 1 or 2,
wherein the controller (350) is operable to monitor the usage level of the virtual memory space and compare the monitored usage level with one or more preset thresholds to determine whether to add/release the logical unit (520) provided by the storage system (100).

9. The computer system according to claim 1 or 2,
wherein the controller (350) is operable to request the storage system (100) to load a logical unit (520) onto a cache memory to provide the logical unit (520) to the external memory included in the virtual memory space, based on the usage level of the virtual memory space.

10. A method of managing a virtual memory space provided by an internal memory (340) and an external memory in a computer, the external memory being provided by a storage system (100) coupled to the computer, the method comprising:
adding a logical unit (520) provided by the storage system (100), to the external memory included in the virtual memory space, by a controller (350) based on a usage level of the virtual memory space; and
releasing a logical unit (520) provided by the storage system (100), from the external memory included in the virtual memory space, by the controller (350) based on the usage level of the virtual memory space.

11. The method according to claim 10,
wherein the adding comprises adding a logical unit (520) provided by the storage system (100) to the virtual memory space when the usage level of the virtual memory space is higher than a first preset threshold.

12. The method according to claim 11,
wherein the releasing comprises releasing a logical unit (520) provided by the storage system (100) from the virtual memory space when the usage level of the virtual memory space is lower than a second preset threshold which is lower than the first threshold.

13. The method according to claim 11, further comprising:
shrinking the external memory provided by the storage system (100) from the virtual memory space by removing one or more storage devices (180) from the external memory, when the usage level of the virtual memory space is lower than a third preset threshold which is lower than the first threshold for a preset period of time.

14. The method according to claim 11, further comprising:
monitoring the usage level of the virtual memory space and comparing the monitored usage level with one or more preset thresholds to determine whether to add/release the logical unit (520) provided by the storage system (100).

15. A computer-readable storage medium storing a plurality of instructions for controlling a data processor to manage a virtual memory space provided by an internal memory (340) and an external memory in a computer, the external memory being provided by a storage system (100) coupled to the computer, the plurality of instructions comprising:
instructions that cause the data processor to add a logical unit (520) provided by the storage system (100), to the external memory included in the virtual memory space, based on a usage level of the virtual memory space; and
instructions that cause the data processor to release a logical unit (520) provided by the storage system (100), from the external memory included in the virtual memory space, based on the usage level of the virtual memory space.
